# EUROPEAN PATENT SPECIFICATION

(11) **EP 3 917 255 B1**
(45) Date of publication and mention of the grant of the patent: **12.08.2026**
(21) Application number: 19914762.0
(22) Date of filing: 15.02.2019
(51) Int. Cl.: H04W 72/12, H04L 1/18, H04L 5/00, H04L 1/08, H04L 1/1822, H04L 1/1829, H04L 1/1867, H04W 72/23, H04W 72/1263

(54) **DATA TRANSMISSION METHOD AND DATA TRANSMISSION APPARATUS**
DATENÜBERTRAGUNGSVERFAHREN UND DATENÜBERTRAGUNGSVORRICHTUNG
PROCÉDÉ ET APPAREIL DE TRANSMISSION DE DONNÉES

(43) Date of publication of application: 01.12.2021
(73) Proprietor: Huawei Technologies Co., Ltd., Longgang District Shenzhen Guangdong 518129 (CN)
(72) Inventor: YU, Zheng, Shenzhen, Guangdong 518129 (CN); BI, Wenping, Shenzhen, Guangdong 518129 (CN)
(74) Representative: Maiwald GmbH
(86) International application number: PCT/CN2019/075266
(87) International publication number: WO 2020/164132

(56) References cited:
- WO-A1-2018/126960
- WO-A1-2018/204491
- WO-A1-2020/164149
- WO-A2-2011/139058
- CN-A- 102 823 184
- CN-A- 108 111 263
- CN-A- 108 605 342
- SAMSUNG: "Scheduling of multiple transport blocks for NB-IoT", vol. RAN WG1, no. Spokane, US; 20181112 - 20181116, 2 November 2018 (2018-11-02), XP051479197, Retrieved from the Internet <URL:http://www.3gpp.org/ftp/tsg%5Fran/WG1%5FRL1/TSGR1%5F95/Docs/R1%2D1812948%2Ezip> [retrieved on 20181102]
- LENOVO ET AL: "Design of scheduling of multiple DL/UL TB for Rel.16 MTC", vol. RAN WG1, no. Spokane, USA; 20181112 - 20181116, 11 November 2018 (2018-11-11), XP051554746, Retrieved from the Internet <URL:http://www.3gpp.org/ftp/Meetings%5F3GPP%5FSYNC/RAN1/Docs/R1%2D1812788%2Ezip> [retrieved on 20181111]
- ZTE: "3GPP TSG RAN WG1 Meeting #94bis R1-1810501", CONSIDERATION ON SCHEDULING ENHANCEMENT FOR MTC, 12 October 2018 (2018-10-12), XP051517909, DOI: 20191015161732A
- MEDIATEK INC.: "3GPP TSG RAN WG1 Meeting #94bis R1-1810610", SCHEDULING OF MULTIPLE DL/UL TRANSPORT BLOCKS IN NB-IOT, 12 October 2018 (2018-10-12), XP051518016, DOI: 20191015161809A

## Description

### TECHNICAL FIELD

This application relates to the communications field, and more specifically, to a data transmission method and a data transmission apparatus.

### BACKGROUND

In a communications system, one piece of downlink control information (downlink control information, DCI) may usually be used to schedule one transport block (transmission block, TB), or one piece of DCI may be used to schedule a transport block carried on one data channel. The data channel may be a physical downlink shared data channel (physical downlink shared channel, PDSCH) or a physical uplink data channel (physical uplink shared channel, PUSCH).

With continuous development of communications technologies, one piece of DCI may be used to schedule a plurality of transport blocks, or one piece of DCI may be used to schedule transport blocks carried on a plurality of data channels. However, in this case, more transmission resources are consumed. For example, when one piece of DCI is used to schedule a plurality of transport blocks, the DCI needs to simultaneously indicate a quantity of scheduled transport blocks, a hybrid automatic repeat request (hybrid automatic retransmission request, HARQ) process index (process number/process index) corresponding to each transport block, and a transmission status corresponding to each transport block. The transmission status herein may indicate that the transport block is newly transmitted or retransmitted.

Therefore, how to improve resource efficiency when one piece of DCI is used to schedule a plurality of transport blocks or transport blocks carried on a plurality of data channels becomes a problem that needs to be urgently resolved.

In SAMSUNG: "Scheduling of multiple transport blocks for NB-IoT", 3GPP DRAFT; R1-1812948; 3RD GENERATION PARTENERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG1, no. Spokane, US; 20181112-20181116, 2 November 2018, the design of scheduling multiple DL/UL transport blocks with the single DCI for NB-IoT is discussed.

In LENNOVO ET AL: "Design of schedulcing of multiple DL/UL TB for Rel. 16 MTC", 3GPP DRAFT; R1-1812788, 3RD GENERATION PARTENERSHIP PROJECT (3GPP), MOBILE COMPETENCE CENTER; 650, ROUTE DES LUCIOLES; F-06921 SOPHIA-ANTIPOLIS CEDEX; FRANCE, vol. RAN WG1, no. Spokane, USA; 20181112-20181116, 11 November 2018, detailed consideration of scheduling improvement for uplink and downlink, especially scheduling multiple DL/UL transport block with DCI for unicast for Rel. 16 MTC are presented.

WO 2018/126960 A1 describes a communication method that comprises: where the number of minimum time scheduling units of one instance of scheduling on a network side is S and the network side device and terminal device use a first transmission mode to perform data transmission, the network side device determining a target scheduling rule from N scheduling rules, wherein the scheduling rule comprises at least one of the mapping relationships between the number of transmission blocks T of this instance of scheduling, T transmission blocks and S minimum time scheduling units in this instance of scheduling, with the first transmission mode being a single antenna transmission solution or a multiple antenna transmission solution; and the network side device communicating with the terminal device according to the target scheduling rule.

### SUMMARY

This application provides a data transmission method and a data transmission apparatus, to reduce overheads of control information and improve resource utilization. The invention is defined by the appended claims.

According to a first aspect of the present invention, a data transmission method is provided, including: A first communications device receives control information sent by a second communications device, where the control information is used to schedule L transport blocks, and L is a positive integer greater than 2; M transport blocks in the L transport blocks scheduled by using the control information are retransmitted, M is a positive integer not greater than L, M is a value in a first value set, and the first value set is a predefined value set or a value set indicated by the second communications device; or H transport blocks in the L transport blocks scheduled by using the control information are retransmitted, H is an integer, H is a value in a second value set associated with the quantity L of transport blocks, and the second value set is a predefined value set or is a value set indicated by the second communications device; or the control information indicates that K transport blocks in the L transport blocks are retransmitted, K is an integer whose value range is {0, 1, 2, ..., L}, each of the L transport blocks corresponds to one hybrid automatic repeat request HARQ process index, and L HARQ process indexes corresponding to the L transport blocks are consecutive; and the first communications device determines, based on the control information, whether the transport blocks scheduled by using the control information are newly transmitted or retransmitted, and sends or receives the transport blocks based on the scheduling with the control information.

According to the method in the embodiments of this application, a quantity of retransmitted TB blocks in a plurality of TB blocks scheduled by using the control information can be limited, so that a quantity of combinations of transport blocks and retransmitted blocks can be reduced, to reduce overheads of control information and improve resource utilization.

According to the first aspect of the present invention, the first value set is {1}, {1, 2}, {0, 1}, {0, 1, 2}, or {0, 1, 2, 3}; or the first value set is {0, 1, L} or {0, 1, 2, L}; or the first value set is {1, 2, ..., T}; or the first value set is {0, 1, 2, ..., T}; or the first value set is {1, 2, ..., T-1}; and T is a positive integer indicated by the second communications device.

According to the first aspect of the present invention, when L belongs to a first transport block quantity set, the second value set includes H1 values; or when L belongs to a second transport block quantity set, the second value set includes H2 values; and H1 is a positive integer, H2 is a positive integer, H1 is not equal to H2, and the first transport block quantity set and the second transport block quantity set are different sets.

In some possible implementations, when the first transport block quantity set is {2, 3, 4, 5}, the second value set is {1}, {0, 1}, {0, 1, L}, {1, L}, or {0, 1, 2, L}; and/or when the second transport block quantity set is {6, 7, 8}, the second value set is {1, 2}, {0, 1, 2}, {0, 1, 2, L}, {1, 2, L}, or {0, 1, 2, 3, L}.

In some possible implementations, when L = 3, L = 4, or L = 5, the second value set is {1}, {0, 1}, {0, 1, L}, {1, L}, or {0, 1, 2, L}; and/or when L = 6, L = 7, or L = 8, the second value set is {1, 2}, {0, 1, 2}, {0, 1, 2, L}, {1, 2, L}, or {0, 1, 2, 3, L}.

In some possible implementations, the control information includes a first field; at least one of bit states of the first field indicates that the control information is used to schedule a single transport block TB; and at least one of bit states of the first field indicates that the control information is used for first scheduling, where the first scheduling indicates that the control information is used to schedule a plurality of transport blocks, and the control information can be used to schedule a part of newly transmitted TBs and a part of retransmitted TBs.

In some possible implementations, the first field indicates that the control information is used to schedule a single newly transmitted TB, and the first field indicates a hybrid automatic repeat request HARQ process index of the TB; or the first field indicates that the control information is used to schedule a single retransmitted TB, and the first field indicates a hybrid automatic repeat request HARQ process index of the TB.

In some possible implementations, at least a first transport block in a plurality of transport blocks scheduled by using the control information is retransmitted, or an L^{th} transport block in a plurality of transport blocks scheduled by using the control information is retransmitted; or at least a first transport block in a plurality of transport blocks scheduled by using the control information is retransmitted, and an L^{th} transport block in the plurality of transport blocks scheduled by using the control information is retransmitted.

In some possible implementations, a HARQ process index of another transport block different from the first transport block in the L transport blocks scheduled by using the control information is determined based on a HARQ process index of the first transport block; and/or each of the L transport blocks scheduled by using the control information corresponds to one HARQ process index, and the L HARQ process indexes corresponding to the L transport blocks are consecutive.

In some possible implementations, when the quantity of the transport blocks scheduled by using the control information is greater than X, the HARQ process index of the first transport block in the plurality of transport blocks scheduled by using the control information is 0, or the HARQ process index of the first transport block is a preset value, or the HARQ process index of the first transport block is a fixed value, where X is a preset positive integer, or X is a configured positive integer.

According to a second aspect of the present invention, a data transmission method is provided, including: A second communications device generates control information, where the control information is used to schedule L transport blocks, and L is a positive integer greater than 2; M transport blocks in the L transport blocks scheduled by using the control information are retransmitted, M is a positive integer not greater than L, M is a value in a first value set, and the first value set is a predefined value set or the first value set is a value set indicated by the second communications device; or H transport blocks in the L transport blocks scheduled by using the control information are retransmitted, H is an integer, H is a value in a second value set associated with the quantity L of transport blocks, and the second value set is a predefined value set or the second value set is a value set indicated by the second communications device; or the control information indicates that K transport blocks in the L transport blocks are retransmitted, K is an integer whose value range is {0, 1, 2, ..., L}, each of the L transport blocks corresponds to one hybrid automatic repeat request HARQ process index, and L HARQ process indexes corresponding to the L transport blocks are consecutive; and the second communications device sends the control information to a first communications device.

According to the method in the embodiments of this application, a quantity of retransmitted TB blocks in a plurality of TB blocks scheduled by using the control information can be limited, so that a quantity of combinations of transport blocks and retransmitted blocks can be reduced, to reduce overheads of control information and improve resource utilization.

According to the second aspect of the present invention, the first value set is {1}, {1, 2}, {0, 1}, {0, 1, 2}, or {0, 1, 2, 3}; or the first value set is {0, 1, L} or {0, 1, 2, L}; or the first value set is {1, 2, ..., T}; or the first value set is {0, 1, 2, ..., T}; or the first value set is {1, 2, ..., T-1}; and T is a positive integer indicated by the second communications device.

According to the second aspect of the present invention, when L belongs to a first transport block quantity set, the second value set includes H1 values; or when L belongs to a second transport block quantity set, the second value set includes H2 values; and H1 is a positive integer, H2 is a positive integer, H1 is not equal to H2, and the first transport block quantity set and the second transport block quantity set are different sets.

In some possible implementations, when the first transport block quantity set is {2, 3, 4, 5}, the second value set is {1}, {0, 1}, {0, 1, L}, {1, L}, or {0, 1, 2, L}; and/or when the second transport block quantity set is {6, 7, 8}, the second value set is {1, 2}, {0, 1, 2}, {0, 1, 2, L}, {1, 2, L}, or {0, 1, 2, 3, L}.

In some possible implementations, when L = 3, L = 4, or L = 5, the second value set is {1}, {0, 1}, {0, 1, L}, {1, L}, or {0, 1, 2, L}; and/or when L = 6, L = 7, or L = 8, the second value set is {1, 2}, {0, 1, 2}, {0, 1, 2, L}, {1, 2, L}, or {0, 1, 2, 3, L}.

In some possible implementations, the control information includes a first field; at least one of bit states of the first field indicates that the control information is used to schedule a single transport block TB; and at least one of bit states of the first field indicates that the control information is used for first scheduling, where the first scheduling indicates that the control information is used to schedule a plurality of transport blocks, and the control information can be used to schedule a part of newly transmitted TBs and a part of retransmitted TBs.

In some possible implementations, the first field indicates that the control information is used to schedule a single newly transmitted TB, and the first field indicates a hybrid automatic repeat request HARQ process index of the TB; or the first field indicates that the control information is used to schedule a single retransmitted TB, and the first field indicates a hybrid automatic repeat request HARQ process index of the TB.

In some possible implementations, at least a first transport block in a plurality of transport blocks scheduled by using the control information is retransmitted, or an L^{th} transport block in a plurality of transport blocks scheduled by using the control information is retransmitted; or at least a first transport block in a plurality of transport blocks scheduled by using the control information is retransmitted, and an L^{th} transport block in the plurality of transport blocks scheduled by using the control information is retransmitted.

In some possible implementations, a HARQ process index of another transport block different from the first transport block in the L transport blocks scheduled by using the control information is determined based on a HARQ process index of the first transport block; and/or each of the L transport blocks scheduled by using the control information corresponds to one HARQ process index, and the L HARQ process indexes corresponding to the L transport blocks are consecutive.

In some possible implementations, when the quantity of the transport blocks scheduled by using the control information is greater than X, the HARQ process index of the first transport block in the plurality of transport blocks scheduled by using the control information is 0, or the HARQ process index of the first transport block is a preset value, or the HARQ process index of the first transport block is a fixed value, where X is a preset positive integer, or X is a configured positive integer.

According to a third aspect of the present invention, a data transmission apparatus is provided, and is configured to perform the method in the first aspect or any possible implementation of the first aspect. Specifically, the apparatus includes modules configured to perform the method in the first aspect or any possible implementation of the first aspect.

According to a fourth aspect of the present invention, a data transmission apparatus is provided, and is configured to perform the method in the second aspect or any possible implementation of the second aspect. Specifically, the apparatus includes modules configured to perform the method in the second aspect or any possible implementation of the second aspect.

According to a fifth aspect of the present invention, a computer program product is provided. The computer program product includes computer program code; and when the computer program code is run on a computer, the computer is enabled to perform the methods in the foregoing aspects.

### BRIEF DESCRIPTION OF DRAWINGS

FIG. 1 is a schematic architectural diagram of a communications system applicable to an embodiment of this application;
FIG. 2 is a schematic flowchart of a data transmission method according to an embodiment of this application;
FIG. 3 is a schematic structural diagram of a data transmission apparatus according to an embodiment of this application;
FIG. 4 is a schematic structural diagram of a data transmission apparatus according to another embodiment of this application; and
FIG. 5 is a schematic structural diagram of a data transmission apparatus according to another embodiment of this application; and

### DESCRIPTION OF EMBODIMENTS

The following describes technical solutions of this application with reference to accompanying drawings.

The technical solutions of the embodiments of this application may be applied to various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS), a worldwide interoperability for microwave access (worldwide interoperability for microwave access, WiMAX) communications system, a future 5^{th} generation (5th generation, 5G) system, or a new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communications function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

As an example rather than a limitation, in the embodiments of this application, the terminal device may alternatively be a wearable device. A wearable device may also be referred to as a wearable intelligent device, and is a general term for wearable devices such as glasses, gloves, watches, clothes, and shoes that are developed by applying wearable technologies in intelligent designs of daily wear. A wearable device is a portable device that can be directly worn on a body or integrated into clothes or an accessory of a user. A wearable device is not merely a hardware device, but is used to implement a powerful function through software support, data interaction, and cloud interaction. Generalized wearable intelligent devices include full-featured and large-size devices, such as smart watches or smart glasses, that can implement all or partial functions without depending on smartphones, and devices, such as various smart bands, or smart jewelry for monitoring physical signs, that focus on only one type of application functions and need to work with other devices such as smartphones.

In addition, the terminal device in the embodiments of this application may alternatively be a terminal device in an internet of things (internet of things, IoT) system. IoT is an important part of development of future information technologies. A main technical feature of the IoT is to connect an object to a network through a communications technology, to implement an intelligent network of human-machine interconnection and thing-thing interconnection. In the embodiments of this application, massive connections, deep coverage, and terminal power saving may be implemented by using, for example, a narrowband (narrow band) NB technology in an IoT technology.

In addition, in the embodiments of this application, the terminal device may further include sensors such as a smart printer, a train detector, and a gas station. Main functions include collecting data (some terminal devices), receiving control information and downlink data of a network device, sending an electromagnetic wave, and transmitting uplink data to the network device.

The network device in the embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN, or the like. This is not limited in the embodiments of this application.

It should be understood that the technical solutions provided in this application may be applied to various communications systems such as a 5G mobile communications system. The 5G mobile communications system in this application includes a non-standalone (non-standalone, NSA) 5G mobile communications system and/or a standalone (standalone, SA) 5G mobile communications system. The technical solutions provided in this application may be further applied to a future communications system such as a sixth generation mobile communications system.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems, for example, a Linux operating system, a Unix operating system, an Android operating system, an iOS operating system, or a Windows operating system, that implement service processing by using a process (process). The application layer includes applications such as a browser, contacts, word processing software, and instant communications software. In addition, a specific structure of an execution body of a method provided in the embodiments of this application is not specifically limited in the embodiments of this application, provided that a program that records code of the method provided in the embodiments of this application can be run to perform communications according to the method provided in the embodiments of this application. For example, the execution body of the method provided in the embodiments of this application may be the terminal device or the network device, or a function module that can invoke and execute the program in the terminal device or the network device.

In addition, aspects or features of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

It should be understood that, in the embodiments of this application, a first communications device may be a terminal device in a communications system, and a second communications device may be a network device in the communications system.

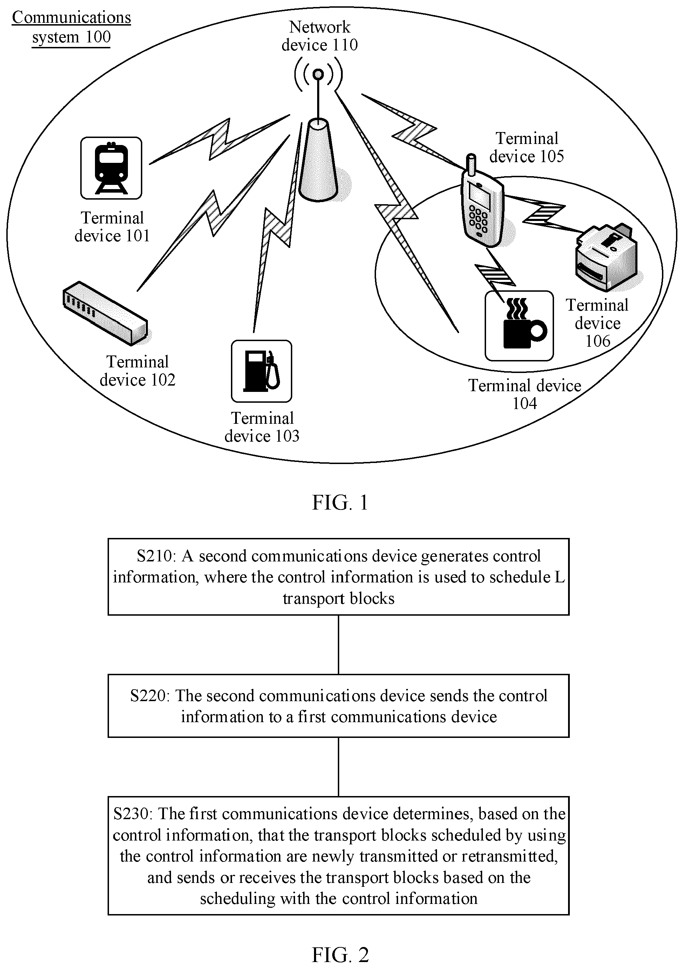

FIG. 1 is a schematic diagram of a communications system 100 applicable to an embodiment of this application. A method in this embodiment of this application may be applied to the communications system 100 shown in FIG. 1. It should be understood that the communications system 100 to which the method in the embodiments of this application may be applied may include more or fewer network devices or terminal devices.

A network device or a terminal device in FIG. 1 may be hardware, or may be software obtained through functional division, or a combination thereof. The network device and the terminal device in FIG. 1 may communicate with each other by using another device or network element.

In the communications system 100 shown in FIG. 1, a network device 110 and terminal devices 101 to 106 form the communications system 100. In the communications system 100, the network device 110 may send control information and/or transport blocks to the terminal devices 101 to 106. Certainly, the terminal devices 101 to 106 may also send uplink data to the network device 110. It should be understood that each of the terminal devices 101 to 106 may be, for example, a cellular phone, a smartphone, a portable computer, a handheld communications device, a handheld computing device, a satellite radio apparatus, a global positioning system, a PDA, and/or any other appropriate device used for communications in the wireless communications system 100.

The communications system 100 may be a PLMN network, a device-to-device (device-to-device, D2D) network, a machine to machine (machine to machine, M2M) network, an IoT network, or another network.

In addition, the terminal devices 104 to 106 may form a communications system. In the communications system, the terminal device 105 may send control information and/or transport blocks to the terminal device 104 or the terminal device 106. Correspondingly, the terminal device 104 or the terminal device 106 may also send uplink data to the terminal device 105.

In this embodiment of this application, the control information may be used to schedule a plurality of transport blocks (transmission block, TB). In this case, usually a relatively large amount of service data needs to be continuously transmitted for a relatively long period of time. Therefore, within a relatively long period of time thereafter, a quantity of scheduled TB blocks is correspondingly stable, and does not change greatly. In addition, when the communications system schedules the TB blocks for transmission, it is ensured that a failure probability of transport blocks is less than a specific proportion, to achieve specific transmission efficiency. For example, a current communications system usually ensures that a block error rate (block error rate, BLER) is less than 10%. Correspondingly, a probability of incorrect K TB blocks when L TB blocks are scheduled can be calculated based on the block error rate. Details are shown in the following Table 1 to Table 7, where both L and K are integers.

**Table 1 Probability of incorrect K TB blocks when eight TBs are scheduled**

| Quantity of incorrect TBs | Quantity of combinations | Probability | Total probability |
|---|---|---|---|
| 0 | 1 | 43% | 96.14% |
| 1 | 8 | 38.26% | |
| 2 | 28 | 14.88% | |
| 3 | 56 | 3.3% | |
| 4 | 20 | 0.4 | |

**Table 2 Probability of incorrect K TB blocks when seven TBs are scheduled**

| Quantity of incorrect TBs | Quantity of combinations | Probability | Total probability |
|---|---|---|---|
| 0 | 1 | 47.8% | 97.4% |
| 1 | 7 | 37.2% | |
| 2 | 21 | 12.4% | |
| 3 | 35 | 2.29% | |

**Table 3 Probability of incorrect K TB blocks when six TBs are scheduled**

| Quantity of incorrect TBs | Quantity of combinations | Probability | Total probability |
|---|---|---|---|
| 0 | 1 | 53.1% | 98.3% |
| 1 | 6 | 35.14% | |
| 2 | 15 | 9.8% | |
| 3 | 20 | 1.45% | |

**Table 4 Probability of incorrect K TB blocks when five TBs are scheduled**

| Quantity of incorrect TBs | Quantity of combinations | Probability | Total probability |
|---|---|---|---|
| 0 | 1 | 59% | 99.09% |
| 1 | 5 | 32.8% | |
| 2 | 10 | 7.29% | |
| 3 | | | |

**Table 5 Probability of incorrect K TB blocks when four TBs are scheduled**

| Quantity of incorrect TBs | Quantity of combinations | Probability | Total probability |
|---|---|---|---|
| 0 | 1 | 65.6% | 94.7% |
| 1 | 4 | 29.1% | |
| 2 | 6 | 4.8% | |
| 3 | | | |

**Table 6 Probability of incorrect K TB blocks when three TBs are scheduled**

| Quantity of incorrect TBs | Quantity of combinations | Probability | Total probability |
|---|---|---|---|
| 0 | 1 | 72.9% | 97.2% |
| 1 | 3 | 24.3% | |
| 2 | 3 | | |
| 3 | | | |

**Table 7 Probability of incorrect K TB blocks when two TBs are scheduled**

| Quantity of incorrect TBs | Quantity of combinations | Probability | Total probability |
|---|---|---|---|
| 0 | 1 | 81% | 99% |
| 1 | 2 | 18% | |
| 2 | 1 | | |
| 3 | | | |

It can be learned from the probabilities of incorrect K TB blocks when L TB blocks are scheduled in the foregoing tables that, when the control information is used to schedule a plurality of TB blocks, a probability of incorrect one or two TB blocks has exceeded 96%.

Therefore, this application provides a data transmission method, to limit a quantity of retransmitted TB blocks in a plurality of TB blocks scheduled once. This reduces a quantity of combinations of transport blocks and retransmitted blocks, to reduce overheads of control information and improve resource utilization.

FIG. 2 is a schematic flowchart of a data transmission method 200 according to an embodiment of this application. A first communications device in the method shown in FIG. 2 may correspond to the terminal device in the communications system 100 shown in FIG. 1, and a second communications device may correspond to the network device in the communications system 100 shown in FIG. 1.

It should be understood that FIG. 2 shows steps or operations of the method 200. However, these steps or operations are merely examples. In this embodiment of this application, other operations or variations of the operations in FIG. 2 may be further performed, or not all steps need to be performed. Alternatively, these steps may be performed in other orders.

S210: The second communications device generates control information. The control information is used to schedule L transport blocks, and L is a positive integer greater than 2.

S220: The second communications device sends the control information to a first communications device.

S230: The first communications device determines, based on the control information, whether the transport blocks scheduled by using the control information are newly transmitted or retransmitted, and sends or receives the transport blocks based on the scheduling with the control information.

In this embodiment of this application, the control information may be downlink control information (downlink control information, DCI).

In a possible implementation, M transport blocks in the L transport blocks scheduled by using the control information may be retransmitted, M is a positive integer not greater than L, M is a value in a first value set, and the first value set may be a predefined value set or the first value set may be a value set indicated by the second communications device.

The first value set may be {1}, {1, 2}, {0, 1}, {0, 1, 2}, or {0, 1, 2, 3}; or the first value set may be {0, 1, L} or {0, 1, 2, L}; or the first value set may be {1, 2, ..., T}; or the first value set may be {0, 1, 2, ..., T}; or the first value set may be {1, 2, ..., T-1}; and T is a positive integer indicated by the second communications device.

Specifically, "0" in the first value set may indicate that all L transport blocks scheduled by using the control information are newly transmitted. "1" in the first value set may indicate that one transport block in the L transport blocks scheduled by using the control information is retransmitted, and all other transport blocks are newly transmitted. "L" in the first value set may indicate that all L transport blocks scheduled by using the control information are retransmitted. Meanings of other values in the first numerical set are similar, and details are not described herein again.

H transport blocks in the L transport blocks scheduled by using the control information may be retransmitted, H is an integer, H may be a value in a second value set associated with the quantity L of transport blocks, and the second value set may be a predefined value set or the second value set may be a value set indicated by the second communications device.

Optionally, when L belongs to a first transport block quantity set, the second value set may include H1 values; or when L belongs to a second transport block quantity set, the second value set may include H2 values; and H1 is a positive integer, H2 is a positive integer, H1 may not be equal to H2, and the first transport block quantity set and the second transport block quantity set may be different sets.

For example, when the first transport block quantity set is {2, 3, 4, 5}, the second value set may be {1}, {0, 1}, {0, 1, L}, {1, L}, or {0, 1, 2, L}; and/or when the second transport block quantity set is {6, 7, 8}, the second value set may be {1, 2}, {0, 1, 2}, {0, 1, 2, L}, {1, 2, L}, or {0, 1, 2, 3, L}. In this case, H1 = 4, H2 = 3, and the first transport block quantity set and the second transport block quantity set are different sets.

Alternatively, for example, when L = 3, L = 4, or L = 5, the second value set may be {1}, {0, 1}, {0, 1, L}, {1, L}, or {0, 1, 2, L}; and/or when L = 6, L = 7, or L = 8, the second value set may be {1, 2}, {0, 1, 2}, {0, 1, 2, L}, {1, 2, L}, or {0, 1, 2, 3, L}.

Similarly, "0" in the second value set may indicate that all L transport blocks scheduled by using the control information are newly transmitted. "1" in the second value set may indicate that one transport block in the L transport blocks scheduled by using the control information is retransmitted, and all other transport blocks are newly transmitted. "L" in the second value set may indicate that all L transport blocks scheduled by using the control information are retransmitted. Meanings of other values in the second numerical set are similar, and details are not described herein again.

In another possible implementation, the control information indicates that K transport blocks in the L transport blocks may be retransmitted, K is an integer whose value range is {0, 1, 2, ..., L}, each of the L transport blocks may correspond to one hybrid automatic repeat request HARQ process index, and L HARQ process indexes corresponding to the L transport blocks may be consecutive.

Optionally, a HARQ process index of another transport block different from a first transport block in the L transport blocks scheduled by using the control information may be determined based on a HARQ process index of the first transport block.

For example, the control information may indicate the HARQ process index of the first transport block, and the L HARQ process indexes corresponding to the L transport blocks may be continuously increasing. In this case, the HARQ process index of the another transport block may be determined based on the HARQ process index of the first transport block.

Alternatively, the L HARQ process indexes corresponding to the L transport blocks may be continuously decreasing.

Optionally, each of the L transport blocks scheduled by using the control information may correspond to one HARQ process index, and the L HARQ process indexes corresponding to the L transport blocks may be consecutive.

Optionally, when the quantity of transport blocks scheduled by using the control information is greater than X, a HARQ process index of a first transport block in a plurality of transport blocks scheduled by using the control information may be 0, or a HARQ process index of a first transport block may be a preset value, or a HARQ process index of a first transport block may be a fixed value, where X is a preset positive integer, or X is a configured positive integer.

For example, X may be seven. In other words, when the quantity of transport blocks scheduled by using the control information is greater than seven, the HARQ process index of the first transport block in the plurality of transport blocks scheduled by using the control information may be 0. Alternatively, when the quantity of transport blocks scheduled by using the control information is greater than seven, the HARQ process index of the first transport block may be a preset value. Alternatively, when the quantity of transport blocks scheduled by using the control information is greater than seven, the HARQ process index of the first transport block may be a fixed value. It should be understood that, that X is seven herein is merely an example rather than a limitation, and X may alternatively be another value.

In this embodiment of this application, the control information may include a first field.

Specifically, at least one of bit states of the first field indicates that the control information is used to schedule a single transport block TB; and at least one of bit states of the first field indicates that the control information is used for first scheduling, where the first scheduling indicates that the control information is used to schedule a plurality of transport blocks, and the control information can be used to schedule a part of newly transmitted TBs and a part of retransmitted TBs.

For example, the control information may include a 4-bit (bit) first field, and when a bit state of the first field is "0001", it may be indicated that the control information is used to schedule one transport block TB.

For another example, when a bit state of the first field is "0011", it may be indicated that the control information is used for first scheduling, that is, the control information is used to schedule a plurality of transport blocks.

It should be understood that the foregoing bit state is merely an example rather than a limitation. In this embodiment of this application, another bit state in the bit states of the first field may also be used to indicate that the control information is used to schedule a single transport block TB or that the control information is used for first scheduling. This is not limited in this application.

Optionally, the first field may indicate that the control information is used to schedule a single newly transmitted TB, and the first field indicates a hybrid automatic repeat request HARQ process index of the TB; or the first field may indicate that the control information is used to schedule a single retransmitted TB, and the first field indicates a hybrid automatic repeat request HARQ process index of the TB.

In a possible implementation, at least a first transport block in a plurality of transport blocks scheduled by using the control information is retransmitted, or an L^{th} transport block in a plurality of transport blocks scheduled by using the control information is retransmitted; or at least a first transport block in a plurality of transport blocks scheduled by using the control information is retransmitted, and an L^{th} transport block in the plurality of transport blocks scheduled by using the control information is retransmitted.

According to the data transmission method in this embodiment of this application, a quantity of retransmitted TB blocks in a plurality of TB blocks scheduled by using the control information can be limited, so that a quantity of combinations of transport blocks and retransmitted blocks can be reduced, to reduce overheads of control information and improve resource utilization.

Further, it can be learned from the foregoing Table 1 to Table 7 that, with a larger quantity of scheduled TB blocks, a probability of incorrect two or more TB blocks is higher. Conversely, with a smaller quantity of scheduled TB blocks, a probability of incorrect two or more TB blocks is lower.

The following describes various possible implementations of this embodiment of this application in detail with reference to Table 8 to Table 26. For ease of understanding, as an example rather than a limitation, in Table 8 to Table 26, an example in which the control information includes the HARQ process index of the first transport block is used for description, and the HARQ process indexes are continuously increasing. It should be understood that, in this embodiment of this application, the control information may alternatively include a plurality of HARQ process indexes, and another association relationship may exist between the HARQ process indexes. This is not limited in this application.

As shown in Table 8, the value range of the quantity L of TBs scheduled by using the control information is [2, 8]. When the quantity L of scheduled TBs is {2, 3, 4, 5}, a supported quantity M of retransmitted TBs may be {1}; or when the quantity L of scheduled TBs is {6, 7, 8}, the supported quantity M of retransmitted TBs may be {1, 2}. When a quantity of TBs scheduled by using the control information is L, the HARQ process index of the first transport block is shown in the table, and remaining L-1 HARQ process indexes may sequentially increase.

In this embodiment of this application, in the value range [2, 8] of the quantity L of scheduled TBs in Table 8, at least one L satisfies that the quantity M of retransmitted TBs belongs to the value range in Table 8, or at least one L is supported to satisfy that the quantity M of retransmitted TBs belongs to the value range in Table 8. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 8, a total supported quantity of combinations of quantities of TBs and quantities of retransmitted TBs is 227. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 8 Quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 1 | 14 |
| 3 | 0-5 | | 18 |
| 4 | 0-4 | | 20 |
| 5 | 0-3 | | 20 |
| 6 | 0-2 | 1 or 2 | 63 |
| 7 | 0-1 | | 56 |
| 8 | 0 | | 36 |
| Total quantity of the combinations of the quantities of TBs and the quantities of retransmitted TBs | | | 227 |

As shown in Table 9, the value range of the quantity L of TBs scheduled by using the control information is [1, 8]. Compared with that in Table 8, a quantity of TBs in Table 9 may be 1. When the quantity L of TBs is 1, the quantity M of retransmitted TBs may be 1 or 0. In this case, a total supported quantity of combinations of quantities of TBs and quantities of retransmitted TBs is 241, so that the control information may use 8 bits (bit) to indicate a quantity of scheduled TBs, a HARQ process index, and a combination of a quantity of TBs and a quantity of retransmitted TBs.

Similar to Table 8, remaining unsupported quantities Ms of retransmitted blocks may be scheduled and indicated with reference to the conventional technology. Details are not described in the embodiments of this application.

**Table 9 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 | 0-7 | 1 | 7 |
| 1 | 0-7 | 0 | 7 |
| 2 | 0-6 | 1 | 14 |
| 3 | 0-5 | | 18 |
| 4 | 0-4 | | 20 |
| 5 | 0-3 | | 20 |
| 6 | 0-2 | 1 or 2 | 63 |
| 7 | 0-1 | | 56 |
| 8 | 0 | | 36 |
| Total quantity of the combinations of the quantities of TBs and the quantities of retransmitted TBs | | | 241 |

As shown in Table 10, the value range of the quantity L of TBs scheduled by using the control information is [2, 8]. When the quantity L of scheduled TBs is {2, 3, 4, 5}, a supported quantity M of retransmitted TBs may be {0, 1, L}; or when the quantity L of scheduled TBs is {6, 7, 8}, the supported quantity M of retransmitted TBs may be {0, 1, 2, L}. When a quantity of TBs scheduled by using the control information is L, the HARQ process index of the first transport block is shown in the table, and remaining L-1 HARQ process indexes sequentially increase. Particularly, in Table 10, when the quantity of TBs scheduled by using the control information is L, the HARQ process index of the first transport block may be limited to 0.

In this embodiment of this application, in the value range [2, 8] of the quantity L of scheduled TBs in Table 10, at least one L satisfies that the quantity M of retransmitted TBs belongs to the value range in Table 10, or at least one L is supported to satisfy that the quantity M of retransmitted TBs belongs to the value range in Table 10. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 10, a total supported quantity of combinations of quantities of TBs and quantities of retransmitted TBs is 253. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 10 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 0, 1, or M | 28 |
| 3 | 0-5 | | 30 |
| 4 | 0-4 | | 30 |
| 5 | 0-3 | | 28 |
| 6 | 0-2 | 0, 1, 2, or M | 69 |
| 7 | 0 | | 30 |
| 8 | 0 | | 38 |
| Total quantity of the combinations of the quantities of TBs and the quantities of retransmitted TBs | | | 253 |

As shown in Table 11, the value range of the quantity L of TBs scheduled by using the control information is [2, 8]. When the quantity L of scheduled TBs is {2, 3, 4, 5}, a supported quantity M of retransmitted TBs may be {0, 1}; or when the quantity L of scheduled TBs is {6, 7, 8}, the supported quantity M of retransmitted TBs may be {0, 1, 2}. When a quantity of TBs scheduled by using the control information is L, the HARQ process index of the first transport block is shown in the table, and remaining L-1 HARQ process indexes sequentially increase. Compared with that in Table 10, in Table 11, when the quantity of TBs scheduled by using the control information is L, the HARQ process index of the first transport block may be 0 or 1.

In this embodiment of this application, in the value range [2, 8] of the quantity L of scheduled TBs in Table 11, at least one L satisfies that the quantity M of retransmitted TBs belongs to the value range in Table 11, or at least one L is supported to satisfy that the quantity M of retransmitted TBs belongs to the value range in Table 11. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TB s are shown in Table 11, a total supported quantity of combinations of quantities of TBs and quantities of retransmitted TBs is 255. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 11 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 0 or 1 | 21 |
| 3 | 0-5 | | 24 |
| 4 | 0-4 | | 25 |
| 5 | 0-3 | | 24 |
| 6 | 0-2 | 0, 1, or 2 | 66 |
| 7 | 0, 1 | | 58 |
| 8 | 0 | | 37 |
| Total quantity of the combinations of the quantities of TBs and the quantities of retransmitted TBs | | | 255 |

As shown in Table 12, the value range of the quantity L of TBs scheduled by using the control information is [2, 8]. When the quantity L of scheduled TBs is {2, 3, 4, 5}, a supported quantity M of retransmitted TBs may be {1, L}; or when the quantity L of scheduled TBs is {6, 7, 8}, the supported quantity M of retransmitted TBs may be {1, 2, L}. When a quantity of TBs scheduled by using the control information is L, the HARQ process index of the first transport block is shown in the table, and remaining L-1 HARQ process indexes sequentially increase.

In this embodiment of this application, in the value range [2, 8] of the quantity L of scheduled TBs in Table 12, at least one L satisfies that the quantity M of retransmitted TBs belongs to the value range in Table 12, or at least one L is supported to satisfy that the quantity M of retransmitted TBs belongs to the value range in Table 12. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 12, a total supported quantity of combinations of quantities of TBs and quantities of retransmitted TBs is 255. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 12 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 1 or L | 21 |
| 3 | 0-5 | | 24 |
| 4 | 0-4 | | 25 |
| 5 | 0-3 | | 24 |
| 6 | 0-2 | 1, 2, or L | 66 |
| 7 | 0, 1 | | 58 |
| 8 | 0 | | 37 |
| Total quantity of the combinations of the quantities of TBs and the quantities of retransmitted TBs | | | 255 |

As shown in Table 13, the value range of the quantity L of TBs scheduled by using the control information is [2, 8]. When the quantity L of scheduled TBs is {2, 3, 4, 5}, a supported quantity M of retransmitted TBs may be {0, 1, 2, L}; or when the quantity L of scheduled TBs is {6, 7, 8}, the supported quantity M of retransmitted TBs may be {0, 1, 2, 3, L}. When a quantity of TBs scheduled by using the control information is L, the HARQ process index of the first transport block is shown in the table, and remaining L-1 HARQ process indexes sequentially increase. Particularly, in Table 13, when the quantity of TBs scheduled by using the control information is L, the HARQ process index of the first transport block may be limited to 0.

In this embodiment of this application, in the value range [2, 8] of the quantity L of scheduled TBs in Table 13, at least one L satisfies that the quantity M of retransmitted TBs belongs to the value range in Table 13, or at least one L is supported to satisfy that the quantity M of retransmitted TBs belongs to the value range in Table 13. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 13, a total supported quantity of combinations of quantities of TBs and quantities of retransmitted TBs is 492. In this case, the control information may use 9 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 13 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 0, 1, 2, or L | 28 |
| 3 | 0-5 | | 48 |
| 4 | 0-4 | | 60 |
| 5 | 0-3 | | 68 |
| 6 | 0-2 | 0, 1, 2, 3, or L | 129 |
| 7 | 0 | | 65 |
| 8 | 0 | | 94 |
| Total quantity of the combinations of the quantities of TBs and the quantities of retransmitted TBs | | | 492 |

As shown in Table 14, the value range of the quantity L of TBs scheduled by using the control information is [2, 8]. When the quantity L of scheduled TBs is {2, 3, 4, 5, 6, 7, 8}, a supported quantity M of retransmitted TBs may be {0, 1, 2, L}. When a quantity of TBs scheduled by using the control information is L, the HARQ process index of the first transport block is shown in the table, and remaining L-1 HARQ process indexes sequentially increase.

In this embodiment of this application, in the value range [2, 8] of the quantity L of scheduled TBs in Table 14, at least one L satisfies that the quantity M of retransmitted TBs belongs to the value range in Table 14, or at least one L is supported to satisfy that the quantity M of retransmitted TBs belongs to the value range in Table 14. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 14, a total supported quantity of combinations of quantities of TBs and quantities of retransmitted TBs is 371. In this case, the control information may use 9 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 14 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 0, 1, 2, or L | 28 |
| 3 | 0-5 | | 48 |
| 4 | 0-4 | | 60 |
| 5 | 0-3 | | 68 |
| 6 | 0-2 | | 69 |
| 7 | 0-1 | | 60 |
| 8 | 0 | | 38 |
| Total quantity of the combinations of the quantities of TBs and the quantities of retransmitted TBs | | | 371 |

As shown in Table 15, the value range of the quantity L of TBs scheduled by using the control information is [2, 8]. When the quantity L of scheduled TBs is {2, 3, 4, 5, 6, 7, 8}, a supported quantity M of retransmitted TBs may be {0, 1, L}. When a quantity of TBs scheduled by using the control information is L, the HARQ process index of the first transport block is shown in the table, and remaining L-1 HARQ process indexes sequentially increase.

In this embodiment of this application, in the value range [2, 8] of the quantity L of scheduled TBs in Table 15, at least one L satisfies that the quantity M of retransmitted TBs belongs to the value range in Table 15, or at least one L is supported to satisfy that the quantity M of retransmitted TBs belongs to the value range in Table 15. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 15, a total supported quantity of combinations of quantities of TBs and quantities of retransmitted TBs is 168. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 15 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | **0, 1, or L** | 28 |
| 3 | 0-5 | | 30 |
| 4 | 0-4 | | 30 |
| 5 | 0-3 | | 28 |
| 6 | 0-2 | | 24 |
| 7 | 0-1 | | 18 |
| 8 | 0 | | 10 |
| Total quantity of the combinations of the quantities of TBs and the quantities of retransmitted TBs | | | 168 |

As shown in Table 16, the value range of the quantity L of TBs scheduled by using the control information is [1, 8]. When the quantity L of scheduled TBs is {1, 2, 3, 4, 5, 6, 7, 8}, a value range of a supported quantity M of retransmitted TBs is [0, L]. When a quantity of TBs scheduled by using the control information is L, the HARQ process index of the first transport block is shown in the table, and remaining L-1 HARQ process indexes sequentially increase.

In Table 16, HARQ process indexes corresponding to all TB blocks are consecutive. In this case, a total supported quantity of combinations of quantities of TBs and quantities of retransmitted TBs is 1004. In this case, the control information may use 10 bits (bit) to indicate a quantity of scheduled TBs, a HARQ process index, and a combination of a quantity of TBs and a quantity of retransmitted TBs. This can reduce a quantity of combinations of transport blocks and retransmitted blocks, thereby helping reduce overheads of control information and improve resource utilization.

**Table 16 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 (optionally supported) | 0-7 | 0-L | 16 |
| 2 | 0-6 | | 28 |
| 3 | 0-5 | | 48 |
| 4 | 0-4 | | 80 |
| 5 | 0-3 | | 128 |
| 6 | 0-2 | | 192 |
| 7 | 0 or 1 | | 256 |
| 8 | 0 | | 256 |
| Total quantity of the combinations of the quantities of TBs and the quantities of retransmitted TBs | | | 1004 |

As shown in Table 17, the value range of the quantity L of TBs scheduled by using the control information is [2, 8]. When the quantity L of scheduled TBs is {2, 3, 4, 5, 6, 7, 8}, a supported quantity M of retransmitted TBs may be one of [1, L]. When a quantity of TBs scheduled by using the control information is L, the HARQ process index of the first transport block is shown in the table, and remaining L-1 HARQ process indexes sequentially increase.

In this embodiment of this application, in the value range [2, 8] of the quantity L of scheduled TBs in Table 17, at least one L satisfies that the quantity M of retransmitted TBs belongs to the value range in Table 17, or at least one L is supported to satisfy that the quantity M of retransmitted TBs belongs to the value range in Table 17. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 17, a total supported quantity of combinations of quantities of TBs and quantities of retransmitted TBs is 494. In this case, the control information may use 9 bits (bit) to indicate a quantity of scheduled TBs, a HARQ process index, and a combination of a quantity of TBs and a quantity of retransmitted TBs.

It should be understood that, a remaining unsupported quantity 0 of retransmitted blocks may be scheduled and indicated with reference to the conventional technology. Details are not described in the embodiments of this application.

**Table 17 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 1-L | 14 |
| 3 | 0-5 | | 24 |
| 4 | 0-4 | | 40 |
| 5 | 0-3 | | 64 |
| 6 | 0-2 | | 96 |
| 7 | 0-1 | | 128 |
| 8 | 0 | | 128 |
| Total quantity of the combinations of the quantities of TBs and the quantities of retransmitted TBs | | | 494 |

As shown in Table 18, the value range of the quantity L of TBs scheduled by using the control information is [2, 8]. When the quantity L of scheduled TBs is {2, 3, 4, 5, 6, 7, 8}, a supported quantity M of retransmitted TBs may be [2, L]. When a quantity of TBs scheduled by using the control information is L, the HARQ process index of the first transport block is shown in the table, and remaining L-1 HARQ process indexes sequentially increase.

In this embodiment of this application, in the value range [2, 8] of the quantity L of scheduled TBs in Table 18, at least one L satisfies that the quantity M of retransmitted TBs belongs to the value range in Table 18, or at least one L is supported to satisfy that the quantity M of retransmitted TBs belongs to the value range in Table 18. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 8], and corresponding quantities Ms of retransmitted TBs are shown in Table 18, a total supported quantity of combinations of quantities of TBs and quantities of retransmitted TBs is 247. In this case, the control information may use 8 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 18 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-6 | 2-L | 7 |
| 3 | 0-5 | | 12 |
| 4 | 0-4 | | 20 |
| 5 | 0-3 | | 32 |
| 6 | 0-2 | | 48 |
| 7 | 0-1 | | 64 |
| 8 | 0 | | 64 |
| Total quantity of the combinations of the quantities of TBs and the quantities of retransmitted TBs | | | 247 |

As shown in Table 19, the value range of the quantity L of TBs scheduled by using the control information is [1, 4]. When the quantity L of scheduled TBs is {1, 2, 3, 4}, a value range of a supported quantity M of retransmitted TBs is one of [0, L]. When a quantity of TBs scheduled by using the control information is L, the HARQ process index of the first transport block is shown in the table, and remaining L-1 HARQ process indexes sequentially increase.

In Table 19, HARQ process indexes corresponding to all TB blocks are consecutive. In this case, a total supported quantity of combinations of quantities of TBs and quantities of retransmitted TBs is 52. In this case, the control information may use 6 bits (bit) to indicate a quantity of scheduled TBs, a HARQ process index, and a combination of a quantity of TBs and a quantity of retransmitted TBs. This can reduce a quantity of combinations of transport blocks and retransmitted blocks, thereby helping reduce overheads of control information and improve resource utilization.

**Table 19 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 (optionally supported) | 0-3 | 0-L | 8 |
| 2 | 0-2 | | 12 |
| 3 | 0-1 | | 16 |
| 4 | 0 | | 16 |
| Total quantity of the combinations of the quantities of TBs and the quantities of retransmitted TBs | | | 52 |

As shown in Table 20, the value range of the quantity L of TBs scheduled by using the control information is [1, 4]. When the quantity L of scheduled TBs is 1, a supported quantity M of retransmitted TBs may be {1}; or when the quantity L of scheduled TBs is {2, 3, 4}, a value range of a supported quantity M of retransmitted TBs is [0, 1, L]. When a quantity of TBs scheduled by using the control information is L, the HARQ process index of the first transport block is shown in the table, and remaining L-1 HARQ process indexes sequentially increase.

In this embodiment of this application, in the value range [1, 4] of the quantity L of scheduled TBs in Table 20, at least one L satisfies that the quantity M of retransmitted TBs belongs to the value range in Table 20, or at least one L is supported to satisfy that the quantity M of retransmitted TBs belongs to the value range in Table 20. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [1, 4], and corresponding quantities Ms of retransmitted TBs are shown in Table 20, a total supported quantity of combinations of quantities of TBs and quantities of retransmitted TBs is 32. In this case, the control information may use 5 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 20 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 (optionally supported) | 0-3 | 1 | 4 |
| 2 | 0-2 | 0, 1, or L | 12 |
| 3 | 0-1 | | 10 |
| 4 | 0 | | 6 |
| Total quantity of the combinations of the quantities of TBs and the quantities of retransmitted TBs | | | 32 |

As shown in Table 21, the value range of the quantity L of TBs scheduled by using the control information is [1, 4]. When the quantity L of scheduled TBs is { 1, 2, 3, 4}, a value range of a supported quantity M of retransmitted TBs is [0, 1, L]. When a quantity of TBs scheduled by using the control information is L, the HARQ process index of the first transport block is shown in the table, and remaining L-1 HARQ process indexes sequentially increase.

In this embodiment of this application, in the value range [1, 4] of the quantity L of scheduled TBs in Table 21, at least one L satisfies that the quantity M of retransmitted TBs belongs to the value range in Table 21, or at least one L is supported to satisfy that the quantity M of retransmitted TBs belongs to the value range in Table 21. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [1, 4], and corresponding quantities Ms of retransmitted TBs are shown in Table 21, a total supported quantity of combinations of quantities of TBs and quantities of retransmitted TBs is 32. In this case, the control information may use 5 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 21 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 (optionally supported) | 0-3 | 0, 1, or L | 8 |
| 2 | 0-1 | | 8 |
| 3 | 0-1 | | 10 |
| 4 | 0 | | 6 |
| Total quantity of the combinations of the quantities of TBs and the quantities of retransmitted TBs | | | 32 |

As shown in Table 22, the value range of the quantity L of TBs scheduled by using the control information is [2, 4]. When the quantity L of scheduled TBs is {2, 3, 4}, a value range of a supported quantity M of retransmitted TBs is [0, 1, L]. When a quantity of TBs scheduled by using the control information is L, the HARQ process index of the first transport block is shown in the table, and remaining L-1 HARQ process indexes sequentially increase.

In this embodiment of this application, in the value range [2, 4] of the quantity L of scheduled TBs in Table 22, at least one L satisfies that the quantity M of retransmitted TBs belongs to the value range in Table 22, or at least one L is supported to satisfy that the quantity M of retransmitted TBs belongs to the value range in Table 22. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 4], and corresponding quantities Ms of retransmitted TBs are shown in Table 22, a total supported quantity of combinations of quantities of TBs and quantities of retransmitted TBs is 28. In this case, the control information may use 5 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 22 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-2 | 0, 1, or L | 12 |
| 3 | 0-1 | | 10 |
| 4 | 0 | | 6 |
| Total quantity of the combinations of the quantities of TBs and the quantities of retransmitted TBs | | | 28 |

As shown in Table 23, the value range of the quantity L of TBs scheduled by using the control information is [1, 4]. When the quantity L of scheduled TBs is {1, 2, 3, 4}, a value range of a supported quantity M of retransmitted TBs is [0, 1]. When a quantity of TBs scheduled by using the control information is L, the HARQ process index of the first transport block is shown in the table, and remaining L-1 HARQ process indexes sequentially increase.

In this embodiment of this application, in the value range [1, 4] of the quantity L of scheduled TBs in Table 23, at least one L satisfies that the quantity M of retransmitted TBs belongs to the value range in Table 23, or that at least one L is supported to satisfy that the quantity M of retransmitted TBs belongs to the value range in Table 23. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [1, 4], and corresponding quantities Ms of retransmitted TBs are shown in Table 23, a total supported quantity of combinations of quantities of TBs and quantities of retransmitted TBs is 30. In this case, the control information may use 5 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 23 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 1 (optionally supported) | 0-3 | 0 or 1 | 8 |
| 2 | 0-2 | | 9 |
| 3 | 0-1 | | 8 |
| 4 | 0 | | 5 |
| Total quantity of the combinations of the quantities of TBs and the quantities of retransmitted TBs | | | 30 |

As shown in Table 24, the value range of the quantity L of TBs scheduled by using the control information is [2, 4]. When the quantity L of scheduled TBs is {2, 3, 4}, a supported quantity M of retransmitted TBs may be {1}. When a quantity of TBs scheduled by using the control information is L, the HARQ process index of the first transport block is shown in the table, and remaining L-1 HARQ process indexes sequentially increase.

In this embodiment of this application, in the value range [2, 4] of the quantity L of scheduled TBs in Table 24, at least one L satisfies that the quantity M of retransmitted TBs belongs to the value range in Table 24, or at least one L is supported to satisfy that the quantity M of retransmitted TBs belongs to the value range in Table 24. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 4], and corresponding quantities Ms of retransmitted TBs are shown in Table 24, a total supported quantity of combinations of quantities of TBs and quantities of retransmitted TBs is 16. In this case, the control information may use 4 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 24 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-2 | 1 | 6 |
| 3 | 0-1 | | 6 |
| 4 | 0 | | 4 |
| Total quantity of the combinations of the quantities of TBs and the quantities of retransmitted TBs | | | 16 |

As shown in Table 25, the value range of the quantity L of TBs scheduled by using the control information is [2, 4]. When the quantity L of scheduled TBs is {2, 3, 4}, a value range of a supported quantity M of retransmitted TBs is [1, L]. When a quantity of TBs scheduled by using the control information is L, the HARQ process index of the first transport block is shown in the table, and remaining L-1 HARQ process indexes sequentially increase.

In this embodiment of this application, in the value range [2, 4] of the quantity L of scheduled TBs in Table 25, at least one L satisfies that the quantity M of retransmitted TBs belongs to the value range in Table 25, or at least one L is supported to satisfy that the quantity M of retransmitted TBs belongs to the value range in Table 25. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 4], and corresponding quantities Ms of retransmitted TBs are shown in Table 25, a total supported quantity of combinations of quantities of TBs and quantities of retransmitted TBs is 20. In this case, the control information may use 5 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 25 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-2 | 1-L | 6 |
| 3 | 0-1 | | 8 |
| 4 | 0 | | 8 |
| Total quantity of the combinations of the quantities of TBs and the quantities of retransmitted TBs | | | 20 |

As shown in Table 26, the value range of the quantity L of TBs scheduled by using the control information is [2, 4]. When the quantity L of scheduled TBs is {2, 3, 4}, a value range of a supported quantity M of retransmitted TBs is [2, L]. When a quantity of TBs scheduled by using the control information is L, the HARQ process index of the first transport block is shown in the table, and remaining L-1 HARQ process indexes sequentially increase.

In this embodiment of this application, in the value range [2, 4] of the quantity L of scheduled TBs in Table 26, at least one L satisfies that the quantity M of retransmitted TBs belongs to the value range in Table 26, or at least one L is supported to satisfy that the quantity M of retransmitted TBs belongs to the value range in Table 26. This can reduce a quantity of combinations of transport blocks and retransmitted blocks, and can also limit a quantity of retransmitted TBs in a plurality of TBs scheduled once, thereby helping reduce overheads of control information and improve resource utilization.

In a possible implementation, if the value range of the quantity L of TBs scheduled by using the control information is [2, 4], and corresponding quantities Ms of retransmitted TBs are shown in Table 26, a total supported quantity of combinations of quantities of TBs and quantities of retransmitted TBs is 12. In this case, the control information may use 4 bits (bit) to indicate a quantity of scheduled TBs, a HARQ process index, and a combination of a quantity of TBs and a quantity of retransmitted TBs.

It should be understood that, remaining unsupported quantities Ms of retransmitted blocks may be scheduled and indicated with reference to the conventional technology. Details are not described in the embodiments of this application.

**Table 26 Another quantity of TBs, HARQ process index, and combination of the quantity of TBs and a quantity of retransmitted TBs**

| L (a quantity of TBs) | Value range of a HARQ process index | M (a quantity of retransmitted TBs) | Combination of the quantity of TBs and the quantity of retransmitted TBs |
|---|---|---|---|
| 2 | 0-2 | 2-L | 3 |
| 3 | 0-1 | | 4 |
| 4 | 0 | | 5 |
| Total quantity of the combinations of the quantities of TBs and the quantities of retransmitted TBs | | | 12 |

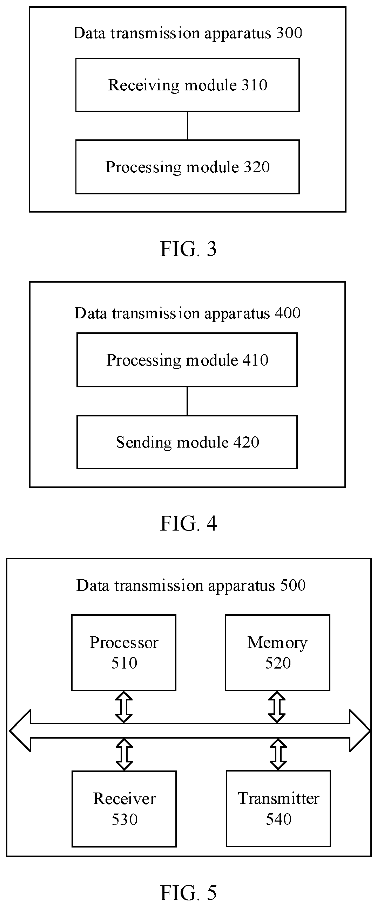

FIG. 3 is a schematic block diagram of an apparatus 300 according to an embodiment of this application. It should be understood that the apparatus 300 is merely an example. The apparatus in this embodiment of this application may further include another module or unit, or include a module having a function similar to that of each module in FIG. 3, or include not all modules in FIG. 3.

A receiving module 310 is configured to receive control information sent by a second communications device, where the control information is used to schedule L transport blocks, and L is a positive integer greater than 2.

M transport blocks in the L transport blocks scheduled by using the control information are retransmitted, M is a positive integer not greater than L, M is a value in a first value set, and the first value set is a predefined value set or the first value set is a value set indicated by the second communications device; or

H transport blocks in the L transport blocks scheduled by using the control information are retransmitted, H is an integer, H is a value in a second value set associated with the quantity L of transport blocks, and the second value set is a predefined value set or the second value set is a value set indicated by the second communications device; or
the control information indicates that K transport blocks in the L transport blocks are retransmitted, K is an integer whose value range is {0, 1, 2, ..., L}, each of the L transport blocks corresponds to one hybrid automatic repeat request HARQ process index, and L HARQ process indexes corresponding to the L transport blocks are consecutive.

A processing module 320 is configured to determine, based on the control information, whether the transport blocks scheduled by using the control information are newly transmitted or retransmitted, and send or receive the transport blocks based on the scheduling with the control information.

The first value set is {1}, {1, 2}, {0, 1}, {0, 1, 2}, or {0, 1, 2, 3}; or the first value set is {0, 1, L} or {0, 1, 2, L}; or the first value set is {1, 2, ..., T}; or the first value set is {0, 1, 2, ..., T}; or the first value set is {1, 2, ..., T-1}; and T is a positive integer indicated by the second communications device.

When L belongs to a first transport block quantity set, the second value set includes H1 values; or when L belongs to a second transport block quantity set, the second value set includes H2 values; and H1 is a positive integer, H2 is a positive integer, H1 is not equal to H2, and the first transport block quantity set and the second transport block quantity set are different sets.

Optionally, when the first transport block quantity set is {2, 3, 4, 5}, the second value set is {1}, {0, 1}, {0, 1, L}, {1, L}, or {0, 1, 2, L}; and/or when the second transport block quantity set is {6, 7, 8}, the second value set is {1, 2}, {0, 1, 2}, {0, 1, 2, L}, {1, 2, L}, or {0, 1, 2, 3, L}.

Optionally, when L = 3, L = 4, or L = 5, the second value set is {1}, {0, 1}, {0, 1, L}, {1, L}, or {0, 1, 2, L}; and/or when L = 6, L = 7, or L = 8, the second value set is {1, 2}, {0, 1, 2}, {0, 1, 2, L}, {1, 2, L}, or {0, 1, 2, 3, L}.

Optionally, the control information includes a first field; at least one of bit states of the first field indicates that the control information is used to schedule a single transport block TB; and at least one of bit states of the first field indicates that the control information is used for first scheduling, where the first scheduling indicates that the control information is used to schedule a plurality of transport blocks, and the control information can be used to schedule a part of newly transmitted TBs and a part of retransmitted TBs.

Optionally, the first field indicates that the control information is used to schedule a single newly transmitted TB, and the first field indicates a hybrid automatic repeat request HARQ process index of the TB; or the first field indicates that the control information is used to schedule a single retransmitted TB, and the first field indicates a hybrid automatic repeat request HARQ process index of the TB.

Optionally, at least a first transport block in a plurality of transport blocks scheduled by using the control information is retransmitted, or an L^{th} transport block in a plurality of transport blocks scheduled by using the control information is retransmitted; or at least a first transport block in a plurality of transport blocks scheduled by using the control information is retransmitted, and an L^{th} transport block in the plurality of transport blocks scheduled by using the control information is retransmitted.

Optionally, a HARQ process index of another transport block different from the first transport block in the L transport blocks scheduled by using the control information is determined based on a HARQ process index of the first transport block; and/or each of the L transport blocks scheduled by using the control information corresponds to one HARQ process index, and the L HARQ process indexes corresponding to the L transport blocks are consecutive.

Optionally, when the quantity of the transport blocks scheduled by using the control information is greater than X, the HARQ process index of the first transport block in the plurality of transport blocks scheduled by using the control information is 0, or the HARQ process index of the first transport block is a preset value, or the HARQ process index of the first transport block is a fixed value, where X is a preset positive integer, or X is a configured positive integer.

FIG. 4 is a schematic block diagram of an apparatus 400 according to an embodiment of this application. It should be understood that the apparatus 400 is merely an example. The apparatus in this embodiment of this application may further include another module or unit, or include a module having a function similar to that of each module in FIG. 4, or include not all modules in FIG. 4.

A processing module 410 is configured to generate control information. The control information is used to schedule L transport blocks, and L is a positive integer greater than 2.

M transport blocks in the L transport blocks scheduled by using the control information are retransmitted, M is a positive integer not greater than L, M is a value in a first value set, and the first value set is a predefined value set or the first value set is a value set indicated by the second communications device; or

H transport blocks in the L transport blocks scheduled by using the control information are retransmitted, H is an integer, H is a value in a second value set associated with the quantity L of transport blocks, and the second value set is a predefined value set or the second value set is a value set indicated by the second communications device; or

the control information indicates that K transport blocks in the L transport blocks are retransmitted, K is an integer whose value range is {0, 1, 2, ..., L}, each of the L transport blocks corresponds to one hybrid automatic repeat request HARQ process index, and L HARQ process indexes corresponding to the L transport blocks are consecutive.

The sending module 420 is configured to send the control information to a first communications device.

The first value set is {1}, {1, 2}, {0, 1}, {0, 1, 2}, or {0, 1, 2, 3}; or the first value set is {0, 1, L} or {0, 1, 2, L}; or the first value set is {1, 2, ..., T}; or the first value set is {0, 1, 2, ..., T}; or the first value set is {1, 2, ..., T-1}; and T is a positive integer indicated by the second communications device.

When L belongs to a first transport block quantity set, the second value set includes H1 values; or when L belongs to a second transport block quantity set, the second value set includes H2 values; and H1 is a positive integer, H2 is a positive integer, H1 is not equal to H2, and the first transport block quantity set and the second transport block quantity set are different sets.

Optionally, when the first transport block quantity set is {2, 3, 4, 5}, the second value set is {1}, {0, 1}, {0, 1, L}, {1, L}, or {0, 1, 2, L}; and/or when the second transport block quantity set is {6, 7, 8}, the second value set is {1, 2}, {0, 1, 2}, {0, 1, 2, L}, {1, 2, L}, or {0, 1, 2, 3, L}.

Optionally, when L = 3, L = 4, or L = 5, the second value set is {1}, {0, 1}, {0, 1, L}, {1, L}, or {0, 1, 2, L}; and/or when L = 6, L = 7, or L = 8, the second value set is {1, 2}, {0, 1, 2}, {0, 1, 2, L}, {1, 2, L}, or {0, 1, 2, 3, L}.

Optionally, the control information includes a first field; at least one of bit states of the first field indicates that the control information is used to schedule a single transport block TB; and at least one of bit states of the first field indicates that the control information is used for first scheduling, where the first scheduling indicates that the control information is used to schedule a plurality of transport blocks, and the control information can be used to schedule a part of newly transmitted TBs and a part of retransmitted TBs.

Optionally, the first field indicates that the control information is used to schedule a single newly transmitted TB, and the first field indicates a hybrid automatic repeat request HARQ process index of the TB; or the first field indicates that the control information is used to schedule a single retransmitted TB, and the first field indicates a hybrid automatic repeat request HARQ process index of the TB.

Optionally, at least a first transport block in a plurality of transport blocks scheduled by using the control information is retransmitted, or an L^{th} transport block in a plurality of transport blocks scheduled by using the control information is retransmitted; or at least a first transport block in a plurality of transport blocks scheduled by using the control information is retransmitted, and an L^{th} transport block in the plurality of transport blocks scheduled by using the control information is retransmitted.

Optionally, a HARQ process index of another transport block different from the first transport block in the L transport blocks scheduled by using the control information is determined based on a HARQ process index of the first transport block; and/or each of the L transport blocks scheduled by using the control information corresponds to one HARQ process index, and the L HARQ process indexes corresponding to the L transport blocks are consecutive.

Optionally, when the quantity of the transport blocks scheduled by using the control information is greater than X, the HARQ process index of the first transport block in the plurality of transport blocks scheduled by using the control information is 0, or the HARQ process index of the first transport block is a preset value, or the HARQ process index of the first transport block is a fixed value, where X is a preset positive integer, or X is a configured positive integer.

FIG. 5 is a schematic structural diagram of a communications apparatus 500 according to an embodiment of this application. It should be understood that the communications apparatus 500 shown in FIG. 5 is merely an example. The communications apparatus in this embodiment of this application may further include another module or unit, or a module with a function similar to that of each module in FIG. 5.

The communications apparatus 500 may include one or more processors 510, one or more memories 520, a receiver 530, and a transmitter 540. The receiver 530 and the transmitter 540 may be integrated together to obtain a transceiver. The memory 520 is configured to store program code executed by the processor 510. The memory 520 may be integrated into the processor 510, or the processor 510 is coupled to the one or more memories 520, to invoke instructions in the memory 520.

In an embodiment, the receiver 530 may be configured to implement operations or steps that can be implemented by the receiving module 310 in FIG. 3, and the processor 510 may be configured to implement operations or steps that can be implemented by the processing module 320 in FIG. 3.

In another embodiment, the processor 510 may be configured to implement operations or steps that can be implemented by the processing module 410 in FIG. 4, and the transmitter 540 may be configured to implement operations or steps that can be implemented by the sending module 420 in FIG. 4.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving (S230), by a first communications device, control information sent by a second communications device, wherein the control information is used to schedule L transport blocks, and L is a positive integer greater than 2;
wherein one of the following is applied:
- M transport blocks in the L transport blocks scheduled by using the control information are retransmitted, M is a positive integer not greater than L, M is a value in a first value set, and the first value set is a predefined value set or the first value set is a value set indicated by the second communications device, wherein
the first value set is {1}, {1, 2}, {0, 1}, {0, 1, 2}, or {0, 1, 2, 3}; or
the first value set is {0, 1, L} or {0, 1, 2, L}; or
the first value set is {1, 2, ..., T}; or
the first value set is {0, 1, 2, ..., T}; or
the first value set is {1, 2, ..., T-1}; and
T is a positive integer indicated by the second communications device; or
- H transport blocks in the L transport blocks scheduled by using the control information are retransmitted, H is an integer, H is a value in a second value set associated with the quantity L of transport blocks, and the second value set is a predefined value set or the second value set is a value set indicated by the second communications device, wherein
when L belongs to a first transport block quantity set, the second value set comprises H1 values; or
when L belongs to a second transport block quantity set, the second value set comprises H2 values; and
H1 is a positive integer, H2 is a positive integer, H1 is not equal to H2, and the first transport block quantity set and the second transport block quantity set are different sets; and
determining, by the first communications device based on the control information, whether the transport blocks scheduled by using the control information are newly transmitted or retransmitted, and sending or receiving the transport blocks based on the scheduling with the control information.

2. The method according to claim 1, wherein
when the first transport block quantity set is {2, 3, 4, 5}, the second value set is {1}, {0, 1}, {0, 1, L}, {1, L}, or {0, 1, 2, L}; and/or
when the second transport block quantity set is {6, 7, 8}, the second value set is {1, 2}, {0, 1, 2}, {0, 1, 2, L}, {1, 2, L}, or {0, 1, 2, 3, L}.

3. The method according to claim 1, wherein
when L = 3, L = 4, or L = 5, the second value set is {1}, {0, 1}, {0, 1, L}, {1, L}, or {0, 1, 2, L}; and/or
when L = 6, L = 7, or L = 8, the second value set is {1, 2}, {0, 1, 2}, {0, 1, 2, L}, {1, 2, L}, or {0, 1, 2, 3, L}.

4. The method according to claim 1, wherein
the control information comprises a first field;
at least one of bit states of the first field indicates that the control information is used to schedule a single transport block TB; and
at least one of bit states of the first field indicates that the control information is used for first scheduling, wherein the first scheduling indicates that the control information is used to schedule a plurality of transport blocks, and the control information can be used to schedule a part of newly transmitted TBs and a part of retransmitted TBs.

5. A data transmission method, comprising:
generating (S210), by a second communications device, control information, wherein the control information is used to schedule L transport blocks, and L is a positive integer greater than 2;
wherein one of the following is applied:
- M transport blocks in the L transport blocks scheduled by using the control information are retransmitted, M is a positive integer not greater than L, M is a value in a first value set, and the first value set is a predefined value set or the first value set is a value set indicated by the second communications device, wherein
the first value set is {1}, {1, 2}, {0, 1}, {0, 1, 2}, or {0, 1, 2, 3}; or
the first value set is {0, 1, L} or {0, 1, 2, L}; or
the first value set is {1, 2, ..., T}; or
the first value set is {0, 1, 2, ..., T}; or
the first value set is {1, 2, ..., T-1}; and
T is a positive integer indicated by the second communications device; or
- H transport blocks in the L transport blocks scheduled by using the control information are retransmitted, H is an integer, H is a value in a second value set associated with the quantity L of transport blocks, and the second value set is a predefined value set or the second value set is a value set indicated by the second communications device, wherein
when L belongs to a first transport block quantity set, the second value set comprises H1 values; or
when L belongs to a second transport block quantity set, the second value set comprises H2 values; and
H1 is a positive integer, H2 is a positive integer, H1 is not equal to H2, and the first transport block quantity set and the second transport block quantity set are different sets; and
sending (S220), by the second communications device, the control information to a first communications device.

6. The method according to claim 5, wherein
when the first transport block quantity set is {2, 3, 4, 5}, the second value set is {1}, {0, 1}, {0, 1, L}, {1, L}, or {0, 1, 2, L}; and/or
when the second transport block quantity set is {6, 7, 8}, the second value set is {1, 2}, {0, 1, 2}, {0, 1, 2, L}, {1, 2, L}, or {0, 1, 2, 3, L}.

7. The method according to claim 5, wherein
when L = 3, L = 4, or L = 5, the second value set is {1}, {0, 1}, {0, 1, L}, {1, L}, or {0, 1, 2, L}; and/or
when L = 6, L = 7, or L = 8, the second value set is {1, 2}, {0, 1, 2}, {0, 1, 2, L}, {1, 2, L}, or {0, 1, 2, 3, L}.

8. The method according to claim 5, wherein
the control information comprises a first field;
at least one of bit states of the first field indicates that the control information is used to schedule a single transport block TB; and
at least one of bit states of the first field indicates that the control information is used for first scheduling, wherein the first scheduling indicates that the control information is used to schedule a plurality of transport blocks, and the control information can be used to schedule a part of newly transmitted TBs and a part of retransmitted TBs.

9. A data transmission apparatus, comprising a receiving module and a processing module, configured to perform the method according to any one of claims 1 to 4.

10. A data transmission apparatus, comprising a processing module and a sending module, configured to perform the method according to any one of claims 5 to 8.

11. A computer program product, wherein the computer program product comprises instructions used to perform the method according to any one of claims 1 to 8.

## Patentansprüche

1. Datenübertragungsverfahren, umfassend:
Empfangen (S230), durch ein erstes Kommunikationsgerät, von Steuerungsinformationen, die durch ein zweites Kommunikationsgerät gesendet werden, wobei die Steuerungsinformationen dazu verwendet werden, L Transportblöcke zu planen, und L eine positive Ganzzahl größer als 2 ist;
wobei eines von Folgendem angewandt wird:
M Transportblöcke in den L Transportblöcken, die unter Verwendung der Steuerungsinformationen geplant werden, werden erneut übertragen, M ist eine positive Ganzzahl, die nicht größer als L ist, M ist ein Wert in einem ersten Wertesatz und der erste Wertesatz ist ein vordefinierter Wertesatz oder der erste Wertesatz ist ein Wertesatz, der durch das zweite Kommunikationsgerät angegeben wird, wobei
der erste Wertesatz {1}, {1, 2}, {0, 1}, {0, 1, 2} oder {0, 1, 2, 3} ist; oder
der erste Wertesatz {0, 1, L} oder {0, 1, 2, L} ist; oder
der erste Wertesatz {1, 2, ..., T} ist; oder
der erste Wertesatz {0, 1, 2, ..., T} ist; oder
der erste Wertesatz {1, 2, ..., T-1} ist; und
T eine positive Ganzzahl ist, die durch das zweite Kommunikationsgerät angegeben wird; oder
H Transportblöcke in den L Transportblöcken, die unter Verwendung der Steuerungsinformationen geplant werden, werden erneut übertragen, H ist eine Ganzzahl, H ist ein Wert in einem zweiten Wertesatz, welcher der Anzahl L an Transportblöcken zugeordnet ist, und der zweite Wertesatz ist ein vordefinierter Wertesatz oder der zweite Wertesatz ist ein Wertesatz, der durch das zweite Kommunikationsgerät angegeben wird, wobei
wenn L zu einem ersten Transportblockanzahlsatz gehört, der zweite Wertesatz H1 Werte umfasst; oder
wenn L zu einem zweiten Transportblockanzahlsatz gehört, der zweite Wertesatz H2 Werte umfasst; und
H1 eine positive Ganzzahl ist, H2 eine positive Ganzzahl ist, H1 nicht gleich H2 ist und der erste Transportblockanzahlsatz und der zweite Transportblockanzahlsatz unterschiedliche Sätze sind; und
Bestimmen, durch das erste Kommunikationsgerät basierend auf den Steuerungsinformationen, ob die Transportblöcke, die unter Verwendung der Steuerungsinformationen geplant werden, erstmals übertragen oder erneut übertragen werden, und Senden oder Empfangen der Transportblöcke basierend auf dem Planen mit den Steuerungsinformationen.

2. Verfahren nach Anspruch 1, wobei
wenn der erste Transportblockanzahlsatz {2, 3, 4, 5} ist, der zweite Wertesatz {1}, {0, 1}, {0, 1, L}, {1, L} oder {0, 1, 2, L} ist; und/oder
wenn der zweite Transportblockanzahlsatz {6, 7, 8} ist, der zweite Wertesatz {1, 2}, {0, 1, 2}, {0, 1, 2, L}, {1, 2, L} oder {0, 1, 2, 3, L} ist.

3. Verfahren nach Anspruch 1, wobei
wenn L = 3, L = 4 oder L = 5, der zweite Wertesatz {1}, {0, 1}, {0, 1, L}, {1, L} oder {0, 1, 2, L} ist; und/oder
wenn L = 6, L = 7 oder L = 8, der zweite Wertesatz {1, 2}, {0, 1, 2}, {0, 1, 2, L}, {1, 2, L} oder {0, 1, 2, 3, L} ist.

4. Verfahren nach Anspruch 1, wobei
die Steuerungsinformationen ein erstes Feld umfassen;
mindestens einer von Bitzuständen des ersten Feldes angibt, dass die Steuerungsinformationen dazu verwendet werden, einen einzelnen Transportblock TB zu planen; und
mindestens einer von Bitzuständen des ersten Feldes angibt, dass die Steuerungsinformationen zum ersten Planen verwendet werden,
wobei das erste Planen angibt, dass die Steuerungsinformationen dazu verwendet werden, eine Vielzahl von Transportblöcken zu planen, und die Steuerungsinformationen dazu verwendet werden können, einen Teil erstmalig übertragener TBs und einen Teil erneut übertragener TBs zu planen.

5. Datenübertragungsverfahren, umfassend:
Erzeugen (S210), durch ein zweites Kommunikationsgerät, von Steuerungsinformationen, wobei die Steuerungsinformationen dazu verwendet werden, L Transportblöcke zu planen, und L eine positive Ganzzahl größer als 2 ist;
wobei eines von Folgendem angewandt wird:
M Transportblöcke in den L Transportblöcken, die unter Verwendung der Steuerungsinformationen geplant werden, werden erneut übertragen, M ist eine positive Ganzzahl, die nicht größer als L ist, M ist ein Wert in einem ersten Wertesatz und der erste Wertesatz ist ein vordefinierter Wertesatz oder der erste Wertesatz ist ein Wertesatz, der durch das zweite Kommunikationsgerät angegeben wird, wobei
der erste Wertesatz {1}, {1, 2}, {0, 1}, {0, 1, 2} oder {0, 1, 2, 3} ist; oder
der erste Wertesatz {0, 1, L} oder {0, 1, 2, L} ist; oder
der erste Wertesatz {1, 2, ..., T} ist; oder
der erste Wertesatz {0, 1, 2, ..., T} ist; oder
der erste Wertesatz {1, 2, ..., T-1} ist; und
T eine positive Ganzzahl ist, die durch das zweite Kommunikationsgerät angegeben wird; oder
H Transportblöcke in den L Transportblöcken, die unter Verwendung der Steuerungsinformationen geplant werden, werden erneut übertragen, H ist eine Ganzzahl, H ist ein Wert in einem zweiten Wertesatz, welcher der Anzahl L an Transportblöcken zugeordnet ist, und der zweite Wertesatz ist ein vordefinierter Wertesatz oder der zweite Wertesatz ist ein Wertesatz, der durch das zweite Kommunikationsgerät angegeben wird, wobei
wenn L zu einem ersten Transportblockanzahlsatz gehört, der zweite Wertesatz H1 Werte umfasst; oder
wenn L zu einem zweiten Transportblockanzahlsatz gehört, der zweite Wertesatz H2 Werte umfasst; und
H1 eine positive Ganzzahl ist, H2 eine positive Ganzzahl ist, H1 nicht gleich H2 ist und der erste Transportblockanzahlsatz und der zweite Transportblockanzahlsatz unterschiedliche Sätze sind; und
Senden (S220), durch das zweite Kommunikationsgerät, der Steuerungsinformationen an ein erstes Kommunikationsgerät.

6. Verfahren nach Anspruch 5, wobei
wenn der erste Transportblockanzahlsatz {2, 3, 4, 5} ist, der zweite Wertesatz {1}, {0, 1}, {0, 1, L}, {1, L} oder {0, 1, 2, L} ist; und/oder
wenn der zweite Transportblockanzahlsatz {6, 7, 8} ist, der zweite Wertesatz {1, 2}, {0, 1, 2}, {0, 1, 2, L}, {1, 2, L} oder {0, 1, 2, 3, L} ist.

7. Verfahren nach Anspruch 5, wobei
wenn L = 3, L = 4 oder L = 5, der zweite Wertesatz {1}, {0, 1}, {0, 1, L}, {1, L} oder {0, 1, 2, L} ist; und/oder
wenn L = 6, L = 7 oder L = 8, der zweite Wertesatz {1, 2}, {0, 1, 2}, {0, 1, 2, L}, {1, 2, L} oder {0, 1, 2, 3, L} ist.

8. Verfahren nach Anspruch 5, wobei
die Steuerungsinformationen ein erstes Feld umfassen;
mindestens einer von Bitzuständen des ersten Feldes angibt, dass die Steuerungsinformationen dazu verwendet werden, einen einzelnen Transportblock TB zu planen; und
mindestens einer von Bitzuständen des ersten Feldes angibt, dass die Steuerungsinformationen zum ersten Planen verwendet werden, wobei das erste Planen angibt, dass die Steuerungsinformationen dazu verwendet werden, eine Vielzahl von Transportblöcken zu planen, und die Steuerungsinformationen dazu verwendet werden können, einen Teil erstmalig übertragener TBs und einen Teil erneut übertragener TBs zu planen.

9. Datenübertragungsvorrichtung, umfassend ein Empfangsmodul und ein Verarbeitungsmodul, die dazu konfiguriert sind, das Verfahren nach einem der Ansprüche 1 bis 4 durchzuführen.

10. Datenübertragungsvorrichtung, umfassend ein Verarbeitungsmodul und ein Sendemodul, die dazu konfiguriert sind, das Verfahren nach einem der Ansprüche 5 bis 8 durchzuführen.

11. Computerprogrammprodukt, wobei das Computerprogrammprodukt Anweisungen umfasst, die dazu verwendet werden, das Verfahren nach einem der Ansprüche 1 bis 8 durchzuführen.

## Revendications

1. Procédé de transmission de données, comprenant :
la réception (S230), par un premier dispositif de communication, d'informations de commande envoyées par un second dispositif de communication, dans lequel les informations de commande sont utilisées pour planifier L blocs de transport, et L est un entier positif supérieur à 2 ;
dans lequel l'une des conditions suivantes est appliquée :
M blocs de transport dans les L blocs de transport planifiés à l'aide des informations de commande sont retransmis, M est un entier positif non supérieur à L, M est une valeur dans un premier ensemble de valeurs, et le premier ensemble de valeurs est un ensemble de valeurs prédéfini ou le premier ensemble de valeurs est un ensemble de valeurs indiqué par le second dispositif de communication, dans lequel
le premier ensemble de valeurs est {1}, {1, 2}, {0, 1}, {0, 1, 2} ou {0, 1, 2, 3} ; ou
la première valeur définie est {0, 1, L} ou {0, 1, 2, L} ; ou la première valeur définie est {1, 2, ..., T} ; ou
la première valeur définie est {0, 1, 2, ..., T} ; ou
le premier ensemble de valeurs est {1, 2, ..., T-1} ; et
T est un entier positif indiqué par le second dispositif de communication ; ou
H blocs de transport dans les L blocs de transport planifiés à l'aide des informations de commande sont retransmis, H est un entier, H est une valeur dans un second ensemble de valeurs associé à la quantité L de blocs de transport, et le second ensemble de valeurs est un ensemble de valeurs prédéfini ou le second ensemble de valeurs est un ensemble de valeurs indiqué par le second dispositif de communication, dans lequel
lorsque L appartient à un premier ensemble de quantités de blocs de transport, le second ensemble de valeurs comprend H1 valeurs ; ou
lorsque L appartient à un second ensemble de quantités de blocs de transport, le second ensemble de valeurs comprend H2 valeurs ; et
H1 est un entier positif, H2 est un entier positif, H1 n'est pas égal à H2, et le premier ensemble de quantités de blocs de transport et le second ensemble de quantités de blocs de transport sont des ensembles différents ; et
le fait de déterminer, par le premier dispositif de communication sur la base des informations de commande, si les blocs de transport planifiés à l'aide des informations de commande sont nouvellement transmis ou retransmis, et l'envoi ou la réception de blocs de transport sur la base de la planification avec les informations de commande.

2. Procédé selon la revendication 1, dans lequel
lorsque le premier ensemble de quantités de blocs de transport défini est {2, 3, 4, 5}, le second ensemble de valeurs est {1}, {0, 1}, {0, 1, L}, {1, L} ou {0, 1, 2, L} ; et/ou
lorsque le second ensemble de quantités de blocs de transport défini est {6, 7, 8}, le second ensemble de valeurs défini est {1, 2}, {0, 1, 2}, {0, 1, 2, L}, {1, 2, L} ou {0, 1, 2, 3, L}.

3. Procédé selon la revendication 1, dans lequel
lorsque L = 3, L = 4 ou L = 5, le second ensemble de valeurs est {1}, {0, 1}, {0, 1, L}, {1, L} ou {0, 1, 2, L} ; et/ou
lorsque L = 6, L = 7 ou L = 8, le second ensemble de valeurs est {1, 2}, {0, 1, 2}, {0, 1, 2, L}, {1, 2, L} ou {0, 1, 2, 3, L}.

4. Procédé selon la revendication 1, dans lequel
les informations de commande comprennent un premier champ ;
au moins l'un des états de bits du premier champ indique que les informations de commande sont utilisées pour planifier un seul bloc de transport, TB ; et
au moins l'un des états de bits du premier champ indique que les informations de commande sont utilisées pour la première planification, dans lequel la première planification indique que les informations de commande sont utilisées pour planifier une pluralité de blocs de transport, et les informations de commande peuvent être utilisées pour planifier une partie des TB nouvellement transmis et une partie des TB retransmis.

5. Procédé de transmission de données, comprenant :
la génération (S210), par un second dispositif de communication, d'informations de commande, dans lequel les informations de commande sont utilisées pour planifier L blocs de transport, et L est un entier positif supérieur à 2 ;
dans lequel l'une des conditions suivantes est appliquée :
M blocs de transport dans les L blocs de transport planifiés à l'aide des informations de commande sont retransmis, M est un entier positif non supérieur à L, M est une valeur dans un premier ensemble de valeurs, et le premier ensemble de valeurs est un ensemble de valeurs prédéfini ou le premier ensemble de valeurs est un ensemble de valeurs indiqué par le second dispositif de communication, dans lequel
le premier ensemble de valeurs est {1}, {1, 2}, {0, 1}, {0, 1, 2} ou {0, 1, 2, 3} ; ou
la première valeur définie est {0, 1, L}, ou {0, 1, 2, L} ; ou la première valeur définie est {1, 2, ..., T} ; ou
la première valeur définie est {0, 1, 2, ..., T} ; ou
le premier ensemble de valeurs est {1, 2, ..., T-1} ; et
T est un entier positif indiqué par le second dispositif de communication ; ou
H blocs de transport dans les L blocs de transport planifiés à l'aide des informations de commande sont retransmis, H est un entier, H est une valeur dans un second ensemble de valeurs associé à la quantité L de blocs de transport, et le second ensemble de valeurs est un ensemble de valeurs prédéfini ou le second ensemble de valeurs est un ensemble de valeurs indiqué par le second dispositif de communication, dans lequel
lorsque L appartient à un premier ensemble de quantités de blocs de transport, le second ensemble de valeurs comprend H1 valeurs ; ou
lorsque L appartient à un second ensemble de quantités de blocs de transport, le second ensemble de valeurs comprend H2 valeurs ; et
H1 est un entier positif, H2 est un entier positif, H1 n'est pas égal à H2, et le premier ensemble de quantités de blocs de transport et le second ensemble de quantités de blocs de transport sont des ensembles différents ; et
l'envoi (S220), par le second dispositif de communication, des informations de commande à un premier dispositif de communication.

6. Procédé selon la revendication 5, dans lequel
lorsque le premier ensemble de quantités de blocs de transport défini est {2, 3, 4, 5}, le second ensemble de valeurs est {1}, {0, 1}, {0, 1, L}, {1, L} ou {0, 1, 2, L} ; et/ou
lorsque le second ensemble de quantités de blocs de transport défini est {6, 7, 8}, le second ensemble de valeurs défini est {1, 2}, {0, 1, 2}, {0, 1, 2, L}, {1, 2, L} ou {0, 1, 2, 3, L}.

7. Procédé selon la revendication 5, dans lequel
lorsque L = 3, L = 4 ou L = 5, le second ensemble de valeurs est {1}, {0, 1}, {0, 1, L}, {1, L} ou {0, 1, 2, L} ; et/ou
lorsque L = 6, L = 7 ou L = 8, le second ensemble de valeurs est {1, 2}, {0, 1, 2}, {0, 1, 2, L}, {1, 2, L} ou {0, 1, 2, 3, L}.

8. Procédé selon la revendication 5, dans lequel
les informations de commande comprennent un premier champ ;
au moins l'un des états de bits du premier champ indique que les informations de commande sont utilisées pour planifier un seul bloc de transport, TB ; et
au moins l'un des états de bits du premier champ indique que les informations de commande sont utilisées pour la première planification, dans lequel la première planification indique que les informations de commande sont utilisées pour planifier une pluralité de blocs de transport, et les informations de commande peuvent être utilisées pour planifier une partie des TB nouvellement transmis et une partie des TB retransmis.

9. Appareil de transmission de données, comprenant un module de réception et un module de traitement, configuré pour mettre en œuvre le procédé selon l'une quelconque des revendications 1 à 4.

10. Appareil de transmission de données, comprenant un module de traitement et un module d'envoi, configuré pour mettre en œuvre le procédé selon l'une quelconque des revendications 5 à 8.

11. Produit de programme informatique, dans lequel le produit de programme informatique comprend des instructions utilisées pour mettre en œuvre le procédé selon l'une quelconque des revendications 1 à 8.
